# EUROPÄISCHE PATENTSCHRIFT

(11) **EP 2 917 086 B1**
(45) Veröffentlichungstag und Bekanntmachung des Hinweises auf die Patenterteilung: **02.01.2019**
(21) Anmeldenummer: 13785427.9
(22) Anmeldetag: 29.10.2013
(51) Int. Cl.: B60W 40/09

(54) **VERFAHREN UND ÜBERWACHUNGSSYSTEM ZUR ÜBERWACHUNG DER NUTZUNG VON KUNDENFUNKTIONEN IN EINEM FAHRZEUG**
METHOD AND MONITORING SYSTEM FOR MONITORING THE USE OF CUSTOMER FUNCTIONS IN A VEHICLE
PROCÉDÉ ET SYSTÈME DE SURVEILLANCE POUR LA SURVEILLANCE DE L'UTILISATION DE FONCTIONS CLIENT DANS UN VÉHICULE

(30) Priorität: 07.11.2012 DE 102012220228
(43) Veröffentlichungstag der Anmeldung: 16.09.2015
(73) Patentinhaber: Bayerische Motoren Werke Aktiengesellschaft, 80809 München (DE)
(72) Erfinder: STROBEL, Christina, 85622 Feldkirchen (DE)
(86) Internationale Anmeldenummer: PCT/EP2013/072605
(87) Internationale Veröffentlichungsnummer: WO 2014/072206

(56) Entgegenhaltungen:
- EP-A1- 0 675 018
- EP-A1- 0 675 018
- EP-A1- 1 418 476
- WO-A1-2012/149118
- WO-A1-2012/149118
- DE-A1-102010 029 204
- DE-A1-102010 029 204

## Beschreibung

Die vorliegende Erfindung betrifft ein Verfahren zur Überwachung der Nutzung von Kundenfunktionen eines Fahrzeug sowie ein Überwachungssystem.

In heutigen Fahrzeugen befindet sich bereits eine große Zahl an Kundenfunktionen der unterschiedlichsten Domänen, wie beispielsweise Komfort, Infotainment, Fahrerassistenz, Fahrdynamikeinstellungen, Personalisierung und dergleichen. Die Anzahl der Funktionen wird auch in Zukunft tendenziell steigen. Diese Funktionen sind dem Fahrer nur zum Teil bekannt, da in der Regel die Betriebsanleitung nicht komplett gelesen wird und durch die Fülle der Funktionen nicht alle explizit beworben werden. Durch Mehrfachbelegung von Tastern sind viele Funktionen nicht durch ein dezidiertes Bedienelement bedienbar. Beispielsweise verschließt ein kurzer Druck auf den Verriegelungstaster des Schlüssels das Fahrzeug, während bei einem Langdruck die Funktion des Komfortschließens aktiviert wird. Dabei wird das Fahrzeug verriegelt und zusätzlich werden alle geöffneten Fenster und das Schiebedach verschlossen.

Um dem Fahrer die Funktionen des Fahrzeuges und insbesondere die so genannten Kundenfunktionen vertraut zu machen, sind Informationsvorrichtungen bekannt, die bei Betätigung eine Bedienelementes die zu diesem Bedienelement zugehörigen Informationen aus einem Speicher auswählen und bildlich darstellen. Eine solche Informationsvorrichtung ist beispielsweise in der DE 44 10 985 A1 beschrieben.

Ein Nachteil einer solchen Informationsvorrichtung ist, dass dem Fahrer eventuell weitere Funktionen in seinem Fahrzeug nicht bekannt werden, da er das entsprechende Bedienelement nicht betätigt. Zudem ist die mit der Informationsvorrichtung gelieferte Information nur für den Fahrer des Fahrzeuges aber nicht für Dritte, wie beispielsweise den Fahrzeughersteller nützlich.

Das Dokument EP 1 418 476 A1 offenbart den Oberbegriff der Ansprüche 1 und 7.

Bei diesem System wird ein Lernnetzwerk, das in einem automatischen Modus betrieben werden kann, verwendet, das Eingabedaten, einschließlich Sensordaten, empfängt und Ausgabedaten gemäß einem Grund-Steuerungsmuster generiert, um das vom Benutzer einstellbare System zu steuern. Weiterhin werden Benutzereingabemittel zum Erzeugen von Benutzereingriffsdaten während eines Eingriffs durch den Nutzer verwendet. Eine Eingriffsverwaltungseinheit zum Empfangen der Benutzereingriffsdaten wird ebenfalls verwendet. Zudem umfasst das System Ausgabeänderungsmittel, die mit der Eingriffsverwaltungseinheit assoziiert sind, um modifizierte Ausgabedaten zu generieren, um das System, das vom Nutzer einstellbar ist, gemäß den Benutzereingriffsdaten zu steuern. Zudem umfasst das System eine Lernverwaltungseinheit, die mit dem Lernnetzwerk assoziiert ist, um das Steuerungsmuster durch lernen aus den Eingabedaten zur Zeit des Benutzereingriffs und modifizierten Ausgabedaten anzupassen. Schließlich umfasst das System Filtermittel, zum Identifizieren eines gültigen Benutzereingriffs, das zum Lernen durch die Lernverwaltungseinheit verwendet wird. Ein Nachteil dieses Systems ist, dass dem Fahrer eventuell weitere Funktionen in seinem Fahrzeug nicht bekannt werden, da er das entsprechende Bedienelement nicht betätigt.

Aufgabe der vorliegenden Erfindung ist es daher eine Lösung zu schaffen, mittels derer dem Informationen zu Kundenfunktionen eines Fahrzeuges auf einfache Weise für unterschiedliche Verwendungen zur Verfügung gestellt werden können.

Der Erfindung liegt die Erkenntnis zugrunde, dass diese Aufgabe gelöst werden kann, indem statt der reinen Betätigung einer Kundenfunktion das Benutzerverhalten berücksichtigt wird.

Gemäß einem ersten Aspekt wird die Aufgabe daher gelöst durch ein Verfahren zur Überwachung der Nutzung von Kundenfunktionen eines Fahrzeuges, das den Schritt des Erfassens mindestens eines Zustandsübergangs mindestens eines Steuergerätes mindestens einer Kundenfunktion umfasst. Das Verfahren umfasst weiterhin zumindest den Schritt des Bestimmens eines Ausgangszustandes und eines Endzustandes des Fahrzeuges und den Schritt des Ermittelns mindestens eines Benutzungsmusters zur Erlangung des Endzustandes von dem Ausgangszustand. Das Verfahren ist dadurch gekennzeichnet, dass ein verwendetes Benutzungsmuster und mindestens ein alternatives Benutzungsmuster zu dem verwendeten Benutzungsmuster ermittelt werden.

Als Kundenfunktionen werden im Sinne der vorliegenden Erfindung eine Funktion eines Kundenfunktionssystems, das auch als Domäne bezeichnet wird, bezeichnet. Beispiele für Kundenfunktionssysteme sind Komfortfunktionen, Infotainmentfunktionen, Fahrerassistenzfunktionen, Fahrdynamikeinstellungen, Personalisierungsfunktionen und dergleichen. Die Kundenfunktionen dieser Kundenfunktionssysteme sind beispielsweise Fensterheber, Fahrzeugverriegelung, Sendersuche, Navigationseinstellung und dergleichen. Diese Kundenfunktionen werden jeweils durch ein Steuergerät angesteuert und können über dieses Steuergerät bedient werden. In der Regel ist zwischen dem Fahrer des Fahrzeuges und dem Steuergerät eine Bedieneinheit vorgesehen. Die Steuergeräte mehrerer Kundenfunktionen können auch zusammengefasst sein. Als Fahrer wird im Sinne der Erfindung der Nutzer des Fahrzeuges und insbesondere der Kundenfunktionen verstanden. Dies kann auch der Beifahrer oder Mitfahrer sein.

Das Erfassen mindestens eines Zustandsübergangs erfolgt erfindungsgemäß vorzugsweise durch eine Überwachungseinheit, die auch als Tracer bezeichnet wird. Die Überwachungseinheit greift dabei nicht auf den Zustand der Kundenfunktion ein sondern erfasst den Zustandsübergang vorzugsweise über eine Überwachungsschnittstelle. Durch den Zustandsübergang, der auch als Zustandsänderung bezeichnet werden kann, eines Steuergerätes wird die Verwendung einer Kundenfunktion angegeben. Sind Steuergeräte für mehrere Kundenfunktionen in einem Steuergerät zusammengefasst, so wird als Zustandsübergang, der erfindungsgemäß überwacht wird, die Zustandsänderung einer der Kundenfunktionen bezeichnet, das heißt dass die Zustandsänderung eines Steuergerätes stets einer speziellen Kundenfunktion zugeordnet werden kann.

Erfindungsgemäß umfasst das Verfahren zur Überwachung den Schritt des Bestimmens eines Ausgangszustandes und eines Endzustandes des Fahrzeuges. Als Ausgangs- und Endzustand des Fahrzeuges wird hierbei der Zustand der einzelnen Steuergeräte der Kundenfunktionen des Fahrzeuges zu unterschiedlichen Stadien bezeichnet. Der Ausgangszustand kann beispielsweise der Zustand der Kundenfunktionen beim Aufschließen des Fahrzeuges, beim Starten des Fahrzeuges oder beim Starten eines Kundenfunktionssystems, wie beispielsweise des Navigationssystems darstellen. Der Endzustand kann beispielsweise den Zustand der Kundenfunktionen beim Abschließen des Fahrzeuges, beim Abschalten des Fahrzeuges oder beim Abschalten eines Kundenfunktionssystems, wie beispielsweise des Navigationssystems, darstellen. Zusätzlich oder alternativ kann ein Endzustand auch beispielsweise durch den Ablauf einer Zeitdauer seit dem Anfangzustand bestimmt werden. Bevorzugt wird der Anfangszustand durch das Aktivieren oder Starten einer Kundenfunktion und der Endzustand durch das Ende der Benutzung dieser Kundenfunktion oder das Abschalten der Kundenfunktion oder des Kundenfunktionssystems bestimmt. Dabei können der Ausgangszustand und der Endzustand durch die Überwachung der Zustandsänderungen der Kundenfunktionen einfach ermittelt werden.

Erfindungsgemäß umfasst das Verfahren weiterhin den Schritt des Ermittelns mindestens eines Benutzungsmusters zur Erlangung des Endzustandes von dem Ausgangszustand. Als Benutzungsmuster werden hierbei die einzelnen Aktionen des Fahrers und die dadurch ausgelösten Zustandsänderungen der Kundenfunktionen bezeichnet.

Indem erfindungsgemäß ein Benutzungsmuster, das mehrere Zustandsänderungen von Kundenfunktionen umfasst, ermittelt wird, kann eine Reihe von Vorteilen erzielt werden. Zum einen ist es möglich dem Fahrer statt zu einer einzelnen Kundenfunktion Informationen zur Verfügung zu stellen, wie dies im Stand der Technik erfolgt, Informationen zum Erreichen des gewünschten Endzustandes zur Verfügung zu stellen. Zudem wird es durch die Ermittlung von Benutzungsmustern für Fahrzeughersteller und Anbieter von Kundenfunktionssystemen das Benutzerverhalten zu erfahren und dieses bei der Planung zu berücksichtigen.

Erfindungsgemäß wird ein verwendetes Benutzungsmuster ermittelt. Weiterhin wird zusätzlich mindestens ein alternatives Benutzungsmuster zu dem verwendeten Benutzungsmuster ermittelt werden. Als verwendetes Benutzungsmuster wird das Benutzungsmuster bezeichnet, das sich durch die Zustandsübergänge zusammensetzt, die durch Aktionen des Fahrers ausgelöst wurden. Als alternatives Benutzungsmuster wird ein Benutzungsmuster bezeichnet, das durch andere Zustandsübergänge einer Kundenfunktion oder Zustandsübergänge einer anderen Kundenfunktion oder einer Kombination daraus von dem gleichen Ausgangszustand zu dem gleichen Endzustand führt, die bei dem verwendeten Benutzungsmuster vorlagen. Die alternativen Benutzungsmuster weisen vorzugsweise eine Gewichtung auf, wobei beispielsweise das alternative Benutzungsmuster mit dem größten Komfort für den Fahrer das größte Gewicht erhält.

Indem das verwendete Benutzungsmuster ermittelt wird, können zum einen Angaben darüber gesammelt werden, welche Kundenfunktion mit welchen Zustandsübergängen von Fahrern genutzt werden. Zusätzlich kann das ermittelte verwendete Benutzungsmuster dazu dienen festzustellen, ob es weitere alternative Benutzungsmuster gibt, oder ob das verwendete Benutzungsmuster das einzige mögliche Benutzungsmuster ist.

Erfindungsgemäß wird anhand des Anfangszustandes und Endzustandes mindestens ein alternatives Benutzungsmuster ermittelt. Alle Benutzungsmuster zu einem bestimmten Anfangszustand und einem dazugehörigen bestimmten Endzustand sind vorzugsweise in dem Überwachungssystem hinterlegt. Diese Benutzungsmuster können in einer Datenbank gespeichert sein. Die Benutzungsmuster sind vorzugsweise in dem Fahrzeug hinterlegt und sind mit der Überwachungseinheit zum Überwachen der Nutzung von Kundenfunktionen verbunden. Durch Auslesen der Benutzungsmuster für eine Kundenfunktion oder für mehrere Kundenfunktionen kann durch Vergleich mit dem verwendeten Benutzungsmuster ermittelt werden, ob alternative Benutzungsmuster existieren.

Die Ermittlung mindestens eines alternativen Benutzungsmusters zu dem verwendeten Benutzungsmuster weist den Vorteil auf, dass dem Fahrer auch nicht verwendete Kundenfunktionen zur Kenntnis gebracht werden können. Zudem erlaubt das Ermitteln von alternativen Benutzungsmustern dem Fahrzeughersteller oder Anbieter von Kundenfunktionssystemen das Erkennen nicht genutzter Benutzungsmuster und damit gegebenenfalls auch nicht genutzter Kundenfunktionen. Wird bei der Ermittlung festgestellt, dass kein alternatives Benutzungsmuster existiert, kann auch dies für den Fahrzeughersteller oder Anbieter von Kundenfunktionssystemen von Nutzen sein.

Gemäß einer Ausführungsform umfasst das Benutzungsmuster mindestens eine Zustandsänderung an mindestens zwei Kundenfunktionen des Fahrzeuges. Hierdurch wird es möglich im Vergleich zur reinen Verwendung einzelner Kundenfunktionen auch Kombinationen von Kundenfunktionen verstärkt zum Einsatz zu bringen. Da bei dem erfindungsgemäßen Verfahren die Zustandsänderungen von Steuergeräten überwacht werden, kann dies auf einfache Weise erfolgen. Gemäß einer weiteren Ausführungsform gehören die mindestens zwei Kundenfunktionen mindestens zu zwei unterschiedlichen Domänen, das heißt Kundenfunktionssystemen. Hierdurch wird ein kundenfunktionssystemsübergreifende Überwachung und Ermittlung von Benutzungsmustern möglich. Diese führt zu einer Vereinfachung für den Fahrer und kann dem Fahrzeughersteller oder Anbieter von Kundenfunktionssystemen weitere Informationen liefern. Schaltet ein Fahrer beispielsweise stets sei Radio bevor er das Fahrzeug verriegelt, so können diese Funktionalitäten in einem neuen Benutzungsmuster zusammengefasst und in einer neuen Reihe angeboten werden.

Gemäß einer Ausführungsform wird anhand des oder der ermittelten Benutzungsmuster eine statistische Bewertung durchgeführt. Bei der statistischen Bewertung kann insbesondere die Häufigkeit der Verwendung oder Nicht-Verwendung eines Benutzungsmusters berücksichtigt werden. Zudem kann hierbei ein Zeitfaktor berücksichtigt werden. Hierdurch kann ermittelt werden, ob ein Fahrer, der auch als Benutzer bezeichnet werden kann, sein Verhalten ändert.

Gemäß einer Ausführungsform wird ein verwendetes Benutzungsmuster, das ermittelt wurde, gespeichert und/oder an zumindest eine externe Einheit übermittelt. Das Benutzungsmuster oder ein aus der Bewertung des Benutzungsmusters erhaltenes Ergebnis kann in dem Überwachungssystem, insbesondere dem Fahrzeug gespeichert werden. Dort kann das verwendete Benutzungsmuster für weitere Bewertungen von anschließend ermittelten verwendeten Benutzungsmustern zur Verfügung stehen.

Als Übermittlung an eine externe Einheit wird in diesem Zusammenhang erfindungsgemäß die Übermittlung des Benutzungsmusters selber und/oder die Übermittlung eines aus der Bewertung des Benutzungsmusters erhaltenen Ergebnisses bezeichnet. Die externe Einheit kann beispielsweise ein Rechner oder eine Datenbank des Fahrzeugherstellers oder eines Anbieters von Kundenfunktionen sein.

Indem das ermittelte verwendete Benutzungsmuster gespeichert und gegebenenfalls übermittelt wird, kann dieses zur Bewertung weiterer Benutzungsmuster und gegebenenfalls für die Planung und Auslegung weiterer Fahrzeuge und Kundenfunktionssysteme dienen.

Eine Auswertung der Nutzung von Kundenfunktionen findet bisher entweder in eigens ausgestatteten Testfahrzeugen statt oder über Kundenbefragungen. Die Auswerteeinheiten werden pro Kundenfunktion separat implementiert und sind meist Teil der Kundenfunktion selbst. Somit ist es mit bisher bekannten Verfahren aufwändig, kundenbezogene und statistisch aussagekräftige Daten über die Nutzung von Kundenfunktionen zu erheben. Insbesondere ist es schwer zu beurteilen, welche Kundenfunktionen vom Kunden tatsächlich benutzt werden. Das wiederum erschwert die Entscheidung, welche Kundenfunktionen in Zukunft expliziter beworben werden müssen beziehungsweise überhaupt noch verbaut werden sollen. Mit dem erfindungsgemäßen Verfahren können diese Nachteile beseitigt werden.

Gemäß einer Ausführungsform wird zumindest eine Information zu mindestens einem alternativen Benutzungsmuster in dem Fahrzeug ausgegeben. Als Ausgabe wird in diesem Zusammenhang eine optische Anzeige oder akustische Information bezeichnet. Die Information zu dem mindestens einen alternativen Benutzungsmuster ist vorzugsweise eine Information zu einem bevorzugten alternativen Benutzungsmuster. Als bevorzugt wird hierbei insbesondere ein Benutzungsmuster bezeichnet, dass den Komfort des Fahrers steigert. Die Information zu dem Benutzungsmuster kann ein Hinweis auf das Benutzungsmuster oder aber vorzugsweise eine Information aus einer Betriebsanleitung des Fahrzeuges zu dem Benutzungsmuster, insbesondere bevorzugten Benutzungsmuster sein. Da das alternative Benutzungsmuster von dem Fahrer nicht benutzt wurde, kann dem Fahrer durch diese Information eine Reihe von Funktionen, die entweder in Untermenüs versteckt sind oder nur durch spezielle Bedienung von Tastern bedienbar sind, zur Kenntnis gebracht werden. Insbesondere beim Kauf eines Gebrauchtwagens weiß der Kunde bisher oft nicht genau, welche Funktionen in seinem Fahrzeug verbaut sind. Dadurch zahlt der Kunde für Funktionen, die er nicht kennt. Es hängt vom Händler ab, ob dem Kunden diese Funktionen gezeigt werden. Mit dem erfindungsgemäßen Verfahren und insbesondere mit der Ausgabe von Informationen zu einem alternativen Benutzungsmuster, insbesondere bevorzugten Benutzungsmuster, können diese Nachteile behoben werden.

Gemäß einer Ausführungsform erfolgt die Zustandsüberwachung mindestens eines Steuergerätes von mindestens einer Überwachungseinheit über eine Buskommunikation oder über eine Funkschnittstelle. Hierdurch können von der Überwachungseinheit zum einen Kundenfunktion aus unterschiedlichen Kundenfunktionssystemen überwacht werden und zum anderen ist eine Änderung des Informationssystems in dem Fahrzeug nicht notwendig. Auch Kundenfunktion eines einzigen Kundenfunktionssystems könne über eine Buskommunikation oder eine Funkschnittstelle auf einfache Weise überwacht werden.

Gemäß einem weiteren Aspekt betrifft die Erfindung ein Überwachungssystem zur Überwachung der Nutzung von Kundenfunktionen eines Fahrzeuges. Das Überwachungssystem umfasst mindestens eine Überwachungseinheit zum Erfassen mindestens eines Zustandsübergangs mindestens eines Steuergerätes mindestens einer Kundenfunktion, zum Bestimmen eines Ausgangszustandes und eines Endzustandes des Fahrzeuges. Das Überwachungssystem ist dadurch gekennzeichnet, dass die Überwachungseinheit zum Ermitteln eines verwendeten Benutzungsmusters und mindestens eines alternativen Benutzungsmusters zu dem verwendeten Benutzungsmuster zur Erlangung des Endzustandes von dem Ausgangszustand dient.

Das Erfassen mindestens eines Zustandsübergangs mindestens eines Steuergerätes mindestens einer Kundenfunktion, das Bestimmen eines Ausgangszustandes und eines Endzustandes des Fahrzeuges und das Ermitteln mindestens eines Benutzungsmusters zur Erlangung des Endzustandes von dem Ausgangszustand können von einer einzigen Überwachungseinheit ausgeführt werden. Es können erfindungsgemäß aber auch mehrere Überwachungseinheit, die miteinander kommunizieren vorgesehen sein. Die Überwachungseinheit wird erfindungsgemäß auch als Tracer bezeichnet.

Gemäß einer bevorzugten Ausführungsform weist das Überwachungssystem weiterhin mindestens eine Analyseeinheit zur Analyse und vorzugsweise zur statistischen Bewertung mindestens eines Benutzungsmusters auf.

Das erfindungsgemäße Überwachungssystem weist vorzugsweise Mittel zur Ausführung des erfindungsgemäßen Verfahrens auf. Beispielsweise weist die Überwachungseinheit eine Schnittstelle zur Kommunikation mit den Steuergeräten von Kundenfunktionen des Fahrzeuges auf.

Vorteile und Merkmale, die bezüglich des erfindungsgemäßen Verfahrens beschrieben werden, gelten - soweit anwendbar - entsprechend auch für das erfindungsgemäße Überwachungssystem und umgekehrt.

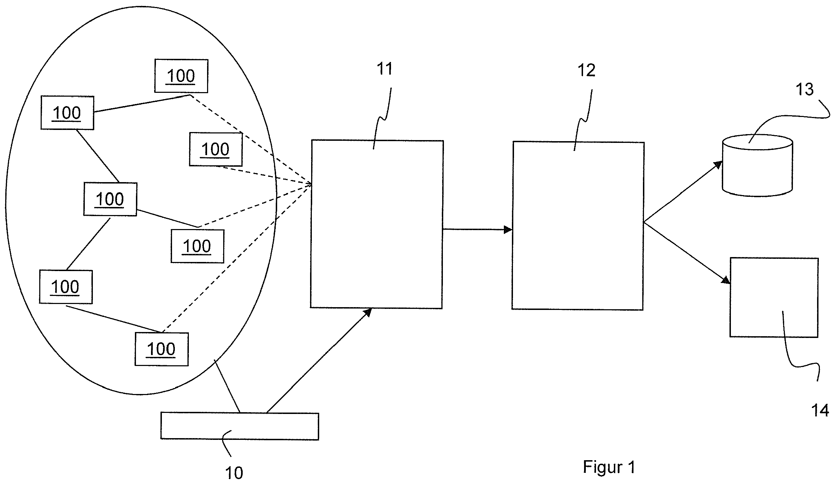

Die Erfindung wird im Folgenden erneut unter Bezugnahme auf die beiliegenden Zeichnungen beschrieben. Hierbei zeigen:
Figur 1: eine schematische Darstellung einer Ausführungsform eines erfindungsgemäßen Überwachungssystems; und

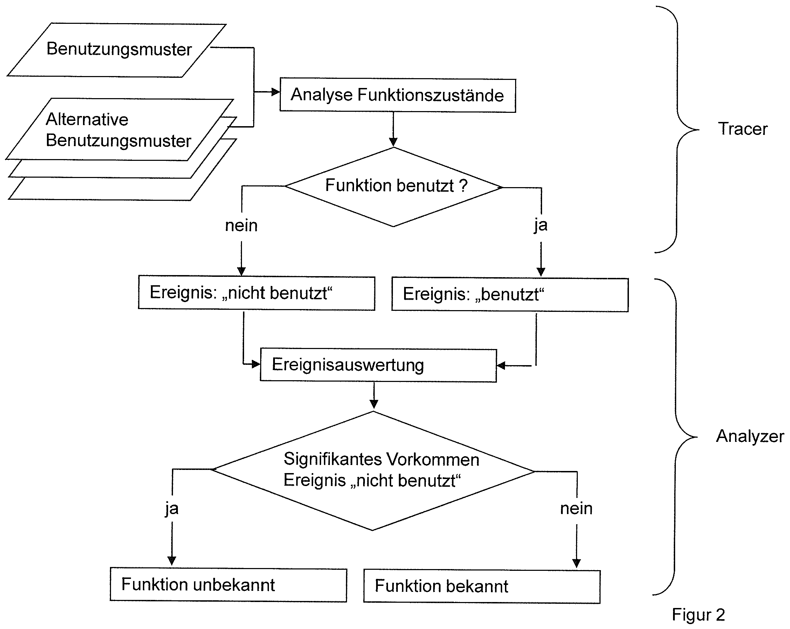

Figur 2: eine schematische Darstellung einiger Verfahrensschritte einer Ausführungsform des erfindungsgemäßen Verfahrens.
□In Figur 1 sind Steuergeräte 100, die auch als ECU bezeichnet werden, in einem In Figur 1 sind Steuergeräte 100, die auch als ECU bezeichnet werden, in einem Fahrzeug gezeigt. Eines oder mehrere Steuergeräte 100 werden von einer Überwachungseinheit 11, die auch als Tracer bezeichnet wird, überwacht. Der Tracer 11 wird von einer Kundenfunktion 10 mit einer Spezifikation von möglichen Benutzungsmustern versorgt. Die möglichen Benutzungsmuster können dem Tracer 11 aber auch auf andere Weise zugänglich gemacht werden.

Mit diesem Überwachungssystem 1 kann ein Verfahren gemäß der Erfindung ausgeführt werden, das unabhängig von der konkreten Kundenfunktion 10 im Fahrzeug eingesetzt werden kann. Das Verfahren wird nur über die Spezifikation von Benutzungsmustern parametrisiert. Insbesondere ist das Verfahren dasselbe für unterschiedliche Domänen beziehungsweise Kundenfunktionssysteme, das heißt das Verfahren ist unabhängig von Komfortfunktion, Fahrerassistenzsystem (FAS) und dergleichen. Wie in Figur 1 gezeigt, überwacht das Fahrzeug den Zustand der Steuergeräte 100 einer Kundenfunktion 10 anhand der Benutzungsmuster und erkennt daraus die Verwendung oder Nicht-Verwendung einer Kundenfunktion 10. Diese Ereignisse gibt der Tracer 11 mit einem Zeitstempel an die Analysiereinheit 12, den sogenannten Analyzer weiter.

Der Analyzer 12 wertet die Einzelereignisse aus und prüft, ob mit genügender statistischer Signifikanz Benutzungsmuster verwendet werden, die von alternativen und insbesondere bevorzugten Benutzungsmustern abweichen. Dabei sollen insbesondere zeitliche Verläuft berücksichtigt werden, die darauf hindeuten, dass der Fahrer sein Verhalten ändert. So soll zum Beispiel erkannt werden, wenn Benutzungsmuster am Anfang oder am Ende des Benutzungszeitraums besonders häufig beobachtet wurden. Dies deutet darauf hin, dass der Fahrer die Kundenfunktion bewusst nicht mehr nutzt oder angefangen hat die Kundenfunktion bewusst zu nutzen. Die in dem Analyzer 12 ermittelten Ergebnisse können an eine externe Einheit 13, 14 übermittelt werden. Diese Einheit kann beispielsweise eine Datenbank oder ein Rechner 12 eines Fahrzeugherstellers oder Anbieters eines Kundenfunktionssystems sein. Alternativ oder zusätzlich können die Ergebnisse des Analyzers 12 oder Informationen, die aufgrund dieser Ergebnisse ermittelt wurden, wie beispielsweise Informationen aus einer Betriebsanleitung an eine externe Einheit, die eine Anzeige 14 oder andere Ausgabeeinheit darstellt, übermittelt und darüber an den Fahrer des Fahrzeuges ausgegeben werden.

Der Tracer 11 ist eine von der konkreten Kundenfunktion unabhängige Komponente, die den Zustand der Kundenfunktion 10 überwacht. Dabei greift der Tracer 11 nicht in den Funktionszustand ein, sondern hat nur eine Überwachungsschnittstelle zur Funktion, beispielsweise Buskommunikation oder Funkschnittstelle. Der Tracer 11 bekommt als Eingabe die Spezifikation eines oder mehrerer Benutzungsmusters. Vorzugsweise wird zumindest ein bevorzugtes Benutzungsmuster an dem Tracer 11 zur Verfügung gestellt. Wird nicht das bevorzugte Benutzungsmuster von dem Fahrer verwendet, so stellt das bevorzugte Benutzungsmuster ein alternatives Benutzungsmuster dar. Optional können mehrere alternative Benutzungsmuster angegeben werden.

Das verwendete Benutzungsmuster beschreibt Zustandsübergänge, wie sie in Situationen auftreten, in der die Kundenfunktion benutzt wird. Die alternativen Benutzungsmuster beschreiben Zustandsübergänge für die gleiche Situation, in der aber eine Kombination anderer Kundenfunktionen benutzt wird, die auch genutzt werden sollten. Das heißt die Benutzungsmuster und alternative Benutzungsmuster beschreiben unterschiedliche Zustandsübergänge von demselben Ausgangszustand in denselben Endzustand.

Die Erfindung kann anhand eines Beispiels wie folgt beschrieben werden. Im Ausgangszustand sitzt ein Fahrer im Fahrzeug, wobei von allen Fenstern und dem Schiebedach beispielsweise zwei offen sind. Der Fahrer verlässt das Fahrzeug mit dem Ziel, dass das Fahrzeug verriegelt ist und alle Fenster sowie das Schiebedach geschlossen sind. Verwendet der Fahrer ein Benutzungsmuster, das die Kombination der Funktion Fenster per Taster in den Türen schließen und anschließend per Schlüssel das Fahrzeug verriegeln, Das Benutzungsmuster beschreibt die Zustandsübergänge für die Funktion des Komfortschließens beschreibt, so wird dies als verwendetes Benutzungsmuster erkannt. Da man die Fenster im Fahrzeug über mehrere Tasten schließen kann, können mehrere Benutzungsmuster auftreten. Wird eines dieser Benutzungsmuster mit einem bevorzugten alternativen Benutzungsmuster verglichen, das insbesondere die Zustandsübergänge für die Funktion des Komfortschließens beschreibt, so kann das verwendete Benutzungsmuster als Nicht-Verwenden des bevorzugten Benutzungsmuster erkannt werden.

Die Auswertungen der ermittelten oder erkannten Benutzungsmuster finden erfindungsgemäß vorzugsweise pro Fahrer statt. Um den Fahrer zu identifizieren, werden Verfahren wie beispielsweise das Schlüsselprofil verwendet.

Die Auswertungen werden per Schnittstelle möglichen Abnehmern bereitgestellt. Abnehmer können die Man-Machine-Interfache (MMI) im Fahrzeug sein, Auswertesysteme bei Händlern oder Backendsystemen. So können dem Fahrer vollautomatisiert Anleitungen zur nicht benutzten Kundenfunktion dargestellt werden, indem man beispielsweise die Auswertung mit der integrierten Betriebsanleitung koppelt. Vorzugsweise wird hierbei darauf geachtet, dass Hinweise zur gleichen Kundenfunktion nicht mehrfach dargestellt werden. Der Analyzer wird zu diesem Zweck mit einer Historie versehen, welche Hinweise bereits publiziert wurden.

Dem Fahrer können somit bedarfsgerechte und personalisierte Vorschläge gemacht werden, wie er sein Fahrzeug optimal nutzen kann. Im Gegensatz zu einem reinen Vorschlagssystem ohne kundenbezogene Daten werden dem Fahrer keine unnötigen Hinweise angezeigt, wodurch das Überwachungssystem weniger aufdringlich ist. Der Fahrer wird an neue Funktionen herangeführt, für die er beim Kauf weiterer Fahrzeuge bereit ist zu zahlen.

Aus der Auswertung lassen sich auch Schlüsse daraus zeihen, welche Funktionen vom Fahrer nicht angenommen werden und daher in künftigen Funktionsumfang nicht mehr vorhanden sein müssen.

Das erfindungsgemäße Verfahren ermöglicht es, festzustellen, ob eine Kundenfunktion genutzt wird oder nicht. Dabei ist der Implementierungsaufwand nur einmalig. Der Aufwand zum Durchführen von Benutzerstudien wird reduziert. Den einzelnen Kundenfunktionen wird ein generisches Mittel zum Aufzeichnen des Nutzungsverhaltens bereitgestellt, so dass extra Implementierungsaufwand pro Kundenfunktion entfällt.

Das erfindungemäße Verfahren kann beispielsweise während der Fahrt die Nutzung von Kundenfunktion auswertet und an mögliche Abnehmer weitergeben. Die Auswertung erfolgt zum Zweck, nicht genutzte Kundenfunktionen zu identifizieren.

### Bezugszeichenliste

- 1: Überwachungssystem
- 10: Kundenfunktion
- 100: Steuergerät (ECU)
- 11: Überwachungseinheit (Tracer)
- 12: Analysiereinheit (Analyzer)

## Patentansprüche

1. Verfahren zur Überwachung der Nutzung von Kundenfunktionen (10) eines Fahrzeuges, das den Schritt des Erfassens mindestens eines Zustandsübergangs mindestens eines Steuergerätes (100) mindestens einer Kundenfunktion (10) umfasst, wobei das Verfahren weiterhin zumindest den Schritt des Bestimmens eines Ausgangszustandes und eines Endzustandes des Fahrzeuges und den Schritt des Ermittelns mindestens eines Benutzungsmusters zur Erlangung des Endzustandes von dem Ausgangszustand umfasst, **dadurch gekennzeichnet, dass** ein verwendetes Benutzungsmuster und mindestens ein alternatives Benutzungsmuster zu dem verwendeten Benutzungsmuster zur Erlangung des Endzustandes von dem Ausgangszustand ermittelt werden.

2. Verfahren nach Anspruch 1, **dadurch gekennzeichnet, dass** das Benutzungsmuster mindestens eine Zustandsänderung an mindestens zwei Kundenfunktionen (10) des Fahrzeuges umfasst, die vorzugsweise mindestens zwei unterschiedlichen Kundenfunktionssystemen zugehören.

3. Verfahren nach einem der Ansprüche 1 oder 2, **dadurch gekennzeichnet, dass** anhand des oder der ermittelten Benutzungsmuster eine statistische Bewertung durchgeführt wird.

4. Verfahren nach einem der Ansprüche 1 bis 3, **dadurch gekennzeichnet, dass** ein verwendetes Benutzungsmuster, das ermittelt wurde, gespeichert und/oder an zumindest eine externe Einheit (13, 14) übermittelt wird.

5. Verfahren nach einem der Ansprüche 1 bis 4, **dadurch gekennzeichnet, dass** zumindest eine Information zu mindestens einem alternativen Benutzungsmuster in dem Fahrzeug, insbesondere mindestens eine Information aus einer Betriebsanleitung des Fahrzeuges, ausgegeben wird.

6. Verfahren nach einem der Ansprüche 1 bis 5, **dadurch gekennzeichnet, dass** die Zustandsüberwachung mindestens eines Steuergerätes (100) von mindestens einer Überwachungseinheit (11) über eine Buskommunikation oder über eine Funkschnittstelle erfolgt.

7. Überwachungssystem zur Überwachung der Nutzung von Kundenfunktionen eines Fahrzeuges, wobei das Überwachungssystem (1) mindestens eine Überwachungseinheit (11) zum Erfassen mindestens eines Zustandsübergangs mindestens eines Steuergerätes (100) mindestens einer Kundenfunktion (10), zum Bestimmen eines Ausgangszustandes und eines Endzustandes des Fahrzeuges umfasst, **dadurch gekennzeichnet, dass** die Überwachungseinheit zum Ermitteln eines verwendeten Benutzungsmusters und mindestens eines alternativen Benutzungsmusters zu dem verwendeten Benutzungsmuster zur Erlangung des Endzustandes von dem Ausgangszustand dient.

8. Überwachungssystem nach Anspruch 7, **dadurch gekennzeichnet, dass** dieses weiterhin mindestens eine Analyseeinheit (12) zur Analyse und vorzugsweise zur statistischen Bewertung mindestens eines Benutzungsmusters aufweist.

9. Überwachungssystem nach einem der Ansprüche 7 oder 8, **dadurch gekennzeichnet, dass** das Überwachungssystem (1) Mittel zur Ausführung des Verfahrens nach einem der Ansprüche 1 bis 6 aufweist.

## Claims

1. A method for monitoring the use of customer functions (10) in a vehicle, the method comprising the step of detecting at least one state transition of at least one control unit (100) for at least one customer function (10), wherein the method also comprises at least the step of defining an initial state and an end state of the vehicle and the step of determining at least one use pattern for reaching the end state from the initial state, **characterised in that** a utilised use pattern and at least one alternative use pattern as compared to the utilised use pattern for reaching the end state from the initial state are determined.

2. A method according to claim 1, **characterised in that** the use pattern comprises at least one state change on at least two customer functions (10) of the vehicle, which two customerfunctions preferably belong to at least two different customer functions systems.

3. A method according to either one of claims 1 or 2, **characterised in that** a statistical evaluation is performed on the basis of the one or more determined use pattern(s).

4. A method according to any one of claims 1 to 3, **characterised in that** a utilised use pattern that has been determined is stored and/or transmitted to at least one external unit (13, 14).

5. A method according to any one of clams 1 to 4, **characterised in that** at least one piece of information concerning at least one alternative use pattern in the vehicle, more especially at least one piece of information from an operators manual of the vehicle, is output.

6. A method according to any one of clams 1 to 5, **characterised in that** the act of monitoring the state of at least one control unit (100) is carried out by at least one monitoring unit (11) via a bus communication orvia a radio interface.

7. A monitoring system for monitoring the use of customer functions in a vehicle, wherein the monitoring system (1) comprises at least one monitoring unit (11) for detecting at least one state transition of at least one control unit (100) for at least one customer function (10), and for defining an initial state and an end state of the vehicle, **characterised in that** the monitoring unit is used to determine a utilised use pattern and at least one alternative use pattern as compared to the utilised use pattern for reaching the end state from the initial state.

8. A monitoring system according to claim 7, **characterised in that** it also comprises at least one analysis unit (12) for analysing and preferably for statistically evaluating at least one use pattern.

9. A monitoring system according to either one of claims 7 or 8, **characterised in that** the monitoring system (1) comprises means for carrying out the method according to any one of claims 1 to 6.

## Revendications

1. Procédé permettant de surveiller l'utilisation de fonctions de service (10) d'un véhicule qui comporte une étape de détection d'au moins une transition d'état d'au moins un appareil de commande (100) d'au moins une fonction de service (10), ce procédé comprenant en outre une étape de détermination de l'état initial et de l'état final du véhicule et une étape de recherche d'au moins un modèle d'utilisation pour obtenir l'état final à partir de l'état initial,
**caractérisé en ce qu'**
un modèle d'utilisation utilisé et au moins un modèle d'utilisation alternatif au modèle d'utilisation utilisé sont recherchés pour obtenir l'état final à partir de l'état initial.

2. Procédé conforme à la revendication 1,
**caractérisé en ce que**
le modèle d'utilisation comporte au moins une modification d'état d'au moins deux fonctions de service (10) du véhicule qui appartiennent de préférence à au moins deux systèmes de fonctions de service différents.

3. Procédé conforme à l'une des revendications 1 et 2,
**caractérisé en ce qu'**
une évaluation statistique est effectuée sur le fondement du ou des modèle(s) d'utilisation recherché(s).

4. Procédé conforme à l'une des revendications 1 à 3,
**caractérisé en ce qu'**
un modèle d'utilisation utilisé qui a été recherché est enregistré et/ou transmis à au moins une unité externe (13, 14).

5. Procédé conforme à l'une des revendications 1 à 4,
**caractérisé en ce qu'**
au moins une information concernant au moins un modèle d'utilisation alternatif dans le véhicule en particulier au moins une information provenant d'une notice d'utilisation du véhicule est délivrée.

6. Procédé conforme à l'une des revendications 1 à 5,
**caractérisé en ce que**
la surveillance d'état d'au moins un appareil de commande (100) est effectuée par au moins une unité de surveillance (11) par l'intermédiaire d'un bus de communication ou d'une interface radio.

7. Système de surveillance permettant de surveiller l'utilisation de fonctions de service d'un véhicule, ce système de surveillance (1) comportant au moins une unité de surveillance (11) permettant de détecter au moins une transition d'état d'au moins un appareil de commande (100) d'au moins une fonction de service (10) pour déterminer un état initial et un état final du véhicule, **caractérisé en ce que** l'unité de surveillance sert à déterminer un modèle d'utilisation utilisé et au moins un modèle d'utilisation alternatif au modèle d'utilisation utilisé pour obtenir l'état final à partir de l'état initial.

8. Système de surveillance, conforme à la revendication 7,
**caractérisé en ce qu'**
il comporte en outre au moins une unité d'analyse (12) permettant d'analyser et de préférence d'évaluer statistiquement au moins un modèle d'utilisation.

9. Système de surveillance, conforme à l'une des revendications 7 à 8,
**caractérisé en ce qu'**
il comporte des moyens permettant la mise en oeuvre du procédé conforme à l'une des revendications 1 à 6.
